# EUROPEAN PATENT APPLICATION

(11) **EP 4 776 462 A1**
(43) Date of publication of application: **15.07.2026**
(21) Application number: 24876929.1
(22) Date of filing: 14.08.2024
(51) Int. Cl.: H02J 7/00, H02J 7/02, H02J 7/34, H02J 7/35

(54) **SYSTEM**

(30) Priority: 11.10.2023 JP 2023176316
(71) Applicant: Softbank Corp., Tokyo 105-7529 (JP)
(72) Inventor: SAITO, Takaya, Tokyo 105-7529 (JP); TAKAYANAGI, Yoshiki, Tokyo 105-7529 (JP); YAMAMOTO, Ryoichi, Tokyo 112-0003 (JP); ENOMOTO, Miki, Tokyo 112-0003 (JP)
(74) Representative: Dilg, Haeusler, Schindelmann Patentanwaltsgesellschaft mbH
(86) International application number: PCT/JP2024/028990
(87) International publication number: WO 2025/079329

(57) **Abstract**

Provided is a system including: a plurality of switching units connected in parallel to a bus to which a power generation unit and a load are connected, the plurality of switching units each being switchable among a current-carrying state in which a current flows between a connected battery pack and the bus, a charge-prohibited state in which a current flows from the battery pack to the bus but a current is prohibited from flowing from the bus to the battery pack, a discharge-prohibited state in which a current flows from the bus to the battery pack but a current is prohibited from flowing from the battery pack to the bus, and a cutoff state in which no current flows between the bus and the battery pack, and each having an NMOS-type discharge FET and an NMOS-type charge FET; a plurality of battery packs, each being the battery pack, that are respectively connected to the plurality of switching units; a boost device which supplies power for control to two or more switching units of the plurality of switching units; and a management unit which manages charging and discharging of the plurality of battery packs by using the boost device.

## Description

### TECHNICAL FIELD

The present invention relates to a system.

### BACKGROUND ART

An apparatus such as a HAPS (High Altitude Platform Station) was known which discharges power of a battery at a relatively low discharging rate to perform various operations (see Patent Document 1, for example).

### (RELATED ART DOCUMENT)

### (PATENT DOCUMENT)

Patent Document 1: Japanese Patent Application Publication No. 2020-043494

### GENERAL DISCLOSURE

According to one embodiment of the present invention, a system is provided. The system may include a plurality of switching units connected in parallel to a bus to which a power generation unit and a load are connected. Each of the plurality of switching units may be switchable among a current-carrying state in which a current flows between a connected battery pack and the bus, a charge-prohibited state in which a current flows from the battery pack to the bus but a current is prohibited from flowing from the bus to the battery pack, a discharge-prohibited state in which a current flows from the bus to the battery pack but a current is prohibited from flowing from the battery pack to the bus, and a cutoff state in which no current flows between the bus and the battery pack. Each of the plurality of switching units may include an NMOS-type discharge FET and an NMOS-type charge FET. The system may include a plurality of battery packs, each being the battery pack, that are respectively connected to the plurality of switching units. The system may include a boost device which supplies power for control to two or more switching units of the plurality of switching units. The system may include a management unit which manages charging and discharging of the plurality of battery packs by using the boost device.

In the system, the boost device may supply the power for control to all of the plurality of switching units.

In any of the systems, the boost device may be connected to the bus, boost power from the bus, and supply the power for control to the two or more switching units of the plurality of switching units.

Any of the systems may further include a battery for boost device, where the boost device may boost power from the battery for boost device, and supply the power for control to the two or more switching units of the plurality of switching units.

In any of the systems, the management unit may, when charging multiple battery packs of the plurality of battery packs, control the boost device to bring multiple switching units, among the switching units, that are connected to the multiple battery packs to be charged, each being the battery pack, into the discharge-prohibited state. The management unit may perform management such that, when multiple switching units of the plurality of switching units are charged, if a voltage difference between the multiple battery packs to be charged, each being the battery pack, is greater than a predetermined threshold value, the charge FET is turned on and the discharge FET is turned off for each of the multiple switching units connected to the multiple battery packs, and if the voltage difference is smaller than the threshold value, the charge FET and the discharge FET are turned on for each of the multiple switching units. The management unit may perform management such that, when some battery packs of the plurality of battery packs are charged, if a voltage difference between the some battery packs is greater than a predetermined threshold value, the charge FET is turned on and the discharge FET is turned off for each of multiple switching units, among the switching units, that are connected to the some battery packs, so as to bring the switching unit into the discharge-prohibited state, and if the voltage difference is smaller than the threshold value, the charge FET and the discharge FET are turned on for each of the multiple switching units so as to bring the switching unit into the current-carrying state, and when the plurality of switching units are brought into the current-carrying state, temperatures of the some battery packs during charging of the some battery packs are obtained and monitored, the switching unit connected to a battery pack, among the some battery packs, a temperature of which has reached a preset temperature, is brought into the discharge-prohibited state, and the switching unit connected to any of some other battery packs of the plurality of battery packs is brought into the current-carrying state. The management unit may perform management such that some switching units, among the switching units, that are connected to some battery packs of the plurality of battery packs, are brought into the current-carrying state and some other switching units, among the switching units, that are connected to some other battery packs of the plurality of battery packs, are brought into the cutoff state, and the some battery packs are charged, temperatures of the some battery packs during charging of the some battery packs are obtained and monitored, the switching unit connected to a battery pack, among the some battery packs, a temperature of which has reached a preset temperature, is brought into the discharge-prohibited state, and the switching unit connected to any of the some other battery packs is brought into the current-carrying state.

In any of the systems, the management unit may, when charging multiple battery packs of the plurality of battery packs, bring multiple switching units, among the switching units, that are connected to the multiple battery packs to be charged, each being the battery pack, into the current-carrying state, obtain and monitor a temperature of each of the multiple battery packs, switch the switching unit connected to the battery pack, among the multiple battery packs, a temperature of which has reached a preset first charging temperature threshold value, to the discharge-prohibited state, continually obtain and monitor a temperature of the battery pack connected to the switching unit switched into the discharge-prohibited state, and when a temperature has decreased to reach a second charging temperature threshold value that is lower than the first charging temperature threshold value, switch the switching unit connected to the battery pack to the current-carrying state.

In any of the systems, the management unit may, when discharging multiple battery packs of the plurality of battery packs, control the boost device to bring multiple switching units, among the switching units, that are connected to the multiple battery packs to be discharged, each being the battery pack, into the charge-prohibited state. The management unit may perform management such that, when multiple battery packs of the plurality of battery packs are discharged, if a voltage difference between the multiple battery packs to be discharged, each being the battery pack, is greater than a predetermined threshold value, the discharge FET is turned on and the charge FET is turned off for each of the multiple switching units, among the switching units, that are connected to the multiple battery packs, and if the voltage difference is smaller than the threshold value, the discharge FET and the charge FET are turned on for each of the multiple switching units. The management unit may, when discharging some battery packs of the plurality of battery packs, if a voltage difference between the some battery packs is greater than a predetermined threshold value, bring each of multiple switching units, among the switching units, that are connected to the some battery packs, into the charge-prohibited state, and if the voltage difference is smaller than the threshold value, bring each of the multiple switching units into a current-carrying state, and when bringing each of the multiple switching units into the current-carrying state, obtain and monitor temperatures of the some battery packs connected to the multiple switching units, bring the switching unit connected to a battery pack, among the some battery packs, a temperature of which has reached a preset temperature, into the discharge-prohibited state, and bring the switching unit connected to any battery pack of some other battery packs of the plurality of battery packs, into the current-carrying state.

In any of the systems, the management unit may, when bringing some battery packs of the plurality of battery packs into the current-carrying state and bringing some other battery packs of the plurality of battery packs into the cutoff state, and causing the some battery packs to be discharged, obtain and monitor temperatures of the some battery packs, and in response to a temperature of any battery pack of the some battery packs reaching a preset temperature, bring the switching unit connected to the battery pack into the discharge-prohibited state, and bring the switching unit connected to any of the some other battery packs into the current-carrying state.

In any of the systems, the management unit may, when discharging multiple battery packs of the plurality of battery packs, bring multiple switching units, among the switching units, that are connected to the multiple battery packs to be discharged, each being the battery pack, into the current-carrying state, obtain and monitor a temperature of each of the multiple battery packs, switch the switching unit connected to the battery pack, among the multiple battery packs, a temperature of which has reached a preset first discharging temperature threshold value, into the discharge-prohibited state or the cutoff state, continually obtain and monitor a temperature of the battery pack connected to the switching unit switched into the discharge-prohibited state or the cutoff state, and when a temperature has decreased to reach a second discharging temperature threshold value that is lower than the first discharging temperature threshold value, switch the switching unit connected to the battery pack into the current-carrying state.

In any of the systems, the boost device may be a charge pump. In any of the systems, the boost device may be a converter. In any of the systems, the boost device may be a high-side driver.

Any of the systems may be mounted on a flight vehicle, the plurality of battery packs may be arranged in a wing portion of the flight vehicle, the power generation unit may perform solar power generation, and the load may be a motor which rotates a propeller of the flight vehicle. The system may include the flight vehicle. The flight vehicle may include a communication control unit which provides a wireless communication service to a user terminal within a communication area formed by emitting a beam toward ground using power discharged by the plurality of battery packs.

It should be noted that the above summary of the invention does not necessarily describe all necessary features of the embodiments of the present invention. The present invention may also be a sub-combination of the features described above.

### BRIEF DESCRIPTION OF THE DRAWINGS

FIG. 1 schematically shows an example of a system 10.
FIG. 2 schematically shows an example of a configuration of a switching unit 210.
FIG. 3 is an explanatory diagram to describe a state of the switching unit 210.
FIG. 4 schematically shows an example of the system 10.
FIG. 5 schematically shows an example of the system 10.
FIG. 6 schematically shows an example of the system 10.
FIG. 7 schematically shows an example of a functional configuration of a management apparatus 100.
FIG. 8 schematically shows another example of the configuration of the switching unit 210.
FIG. 9 schematically shows an example of a HAPS 700 on which the system 10 is mounted.
FIG. 10 schematically shows an example of a hardware configuration of a computer 1200 which functions as the management apparatus 100.

### DESCRIPTION OF EXEMPLARY EMBODIMENTS

The present invention will be described below through embodiments of the invention, but the following embodiments do not limit the invention according to the claims. Further, not all of combinations of features described in the embodiments are essential to the solving means of the invention.

A battery (especially a battery using a lithium metal negative electrode) tends to deteriorate quickly at a low discharging rate. As one solution for this, a technology has been proposed in which a plurality of battery packs are used alternately to increase the discharging rate per battery pack. When alternately using the plurality of battery packs, it is necessary to regulate an inflow of power between the battery packs, and it is conceivable to perform on/off control by arranging an FET which can individually regulate charging and discharging, on a + line. When a + line FET is placed, it is conceivable to use a PMOS-type FET or to operate an NMOS-type FET using a boost device. However, especially in a case of a high-voltage, high-current pack, when using PMOS-type FETs, since individual on-resistances are high, it is necessary to connect a considerable number of them in parallel, which poses issues in terms of weight/area and responsiveness. In a system 10 according to the present embodiment, NMOS-type FETs are employed.

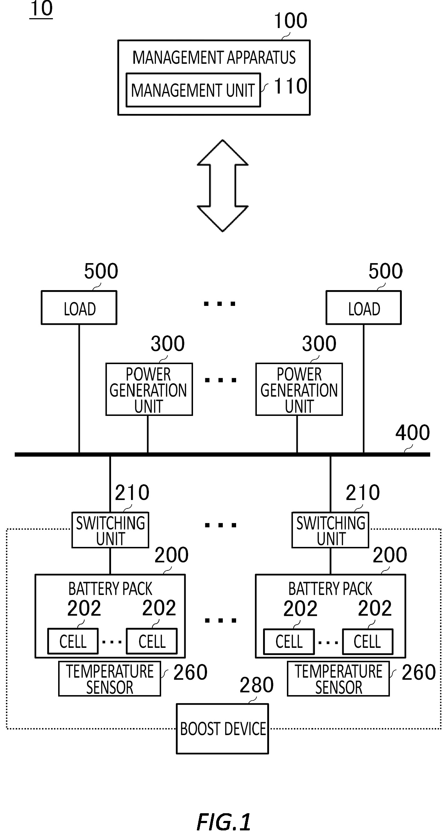

FIG. 1 schematically shows an example of the system 10. The system 10 includes a plurality of switching units 210. The system 10 may include a plurality of battery packs 200 respectively connected to the plurality of switching units 210. The system 10 may include a boost device 280 which supplies the power for control to the plurality of switching units 210. The system 10 may include a plurality of power generation units 300. The system 10 may include a plurality of loads 500. The plurality of switching units 210, the plurality of power generation units 300, and the plurality of loads 500 may be connected in parallel to a bus 400.

The system 10 may include a management apparatus 100 including a management unit 110. The management unit 110 may manage charging and discharging of the plurality of battery packs 200 by controlling the plurality of switching units 210 and the boost device 280. The system 10 may include a plurality of temperature sensors 260 which respectively measure temperatures of the plurality of battery packs 200. The management unit 110 may obtain the temperatures of the plurality of battery packs 200 respectively from the plurality of temperature sensors 260. Here, a connection relationship between the management unit 110 and another component is omitted from the illustration.

A battery type of a battery pack 200 may be any type. The battery pack 200 is a battery using lithium for a negative electrode, for example. The battery pack 200 may include, for example, a lithium ion battery. The battery pack 200 may include, for example, a lithium metal battery.

The battery pack 200 includes a plurality of cells 202. A cell 202 may be, for example, a battery cell using metallic lithium as a negative electrode.

A switching unit 210 may be switchable among a current-carrying state in which a current flows between a connected battery pack 200 and the bus 400, a charge-prohibited state in which a current flows from the battery pack 200 to the bus 400 but a current is prohibited from flowing from the bus 400 to the battery pack 200, a discharge-prohibited state in which a current flows from the bus 400 to the battery pack 200 but a current is prohibited from flowing from the battery pack 200 to the bus 400, and a cutoff state in which no current flows between the bus 400 and the battery pack 200.

The switching unit 210 includes, for example, two NMOS-type FETs connected in series in opposite directions. A MOSFET allows a current to flow in both directions when it is on, and allows a current to flow in only one direction via a parasitic diode when it is off. Accordingly, directly connecting two MOSFETs in opposite directions makes it possible to achieve a configuration in which the current-carrying state, the charge-prohibited state, the discharge-prohibited state, and the cutoff state can be switched.

A power generation unit 300 performs a solar power generation, for example. A power generation technique according to the power generation unit 300 may be another power generation technique. The battery pack 200 can be charged by power generated by the power generation unit 300.

The load 500 consumes the power of the battery pack 200 or consumes the power generated by the power generation unit 300. The load 500 may be any apparatus that is operated by power. For example, when the system 10 is mounted in a flight vehicle, the load 500 may be an apparatus related to a flight of a flight vehicle such as a propeller or an elevator.

The system 10 according to the present embodiment includes at least one boost device 280, a number of which is smaller than a number of switching units 210. When the system 10 includes one boost device 280, the boost device 280 supplies the power for control to all of the plurality of switching units 210. When the system 10 includes a plurality of boost devices 280, at least one boost device 280 of the plurality of boost devices 280 supplies the power for control to two or more switching units 210. This makes it possible to contribute to reducing a weight of the entire system 10 and reducing a cost of the entire system 10 as compared with a case where a same number of boost devices 280 as a number of the plurality of switching units 210 are provided. FIG. 1 illustrates a case where the system 10 includes one boost device 280 which supplies the power for control to all of the plurality of switching units 210.

The boost device 280 may be a charge pump. The boost device 280 may be a converter. The boost device 280 may be a high-side driver.

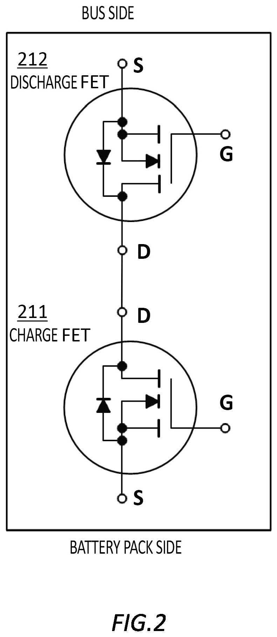

FIG. 2 schematically shows an example of a configuration of the switching unit 210. The switching unit 210 includes an NMOS-type FET 211 and an NMOS-type FET 212 which are connected in series. The FET 211 may be used to turn charging of the battery pack 200 on and off. The FET 211 may be referred to as a charge FET. The FET 212 may be used to turn discharging of the battery pack 200 on and off. The FET 212 may be referred to as a discharge FET. FIG. 2 shows an example in which the charge FET is arranged on the battery pack 200 side and the discharge FET is arranged on the bus 400 side, but the charge FET may be arranged on the bus 400 side and the discharge FET may be arranged on the battery pack 200 side.

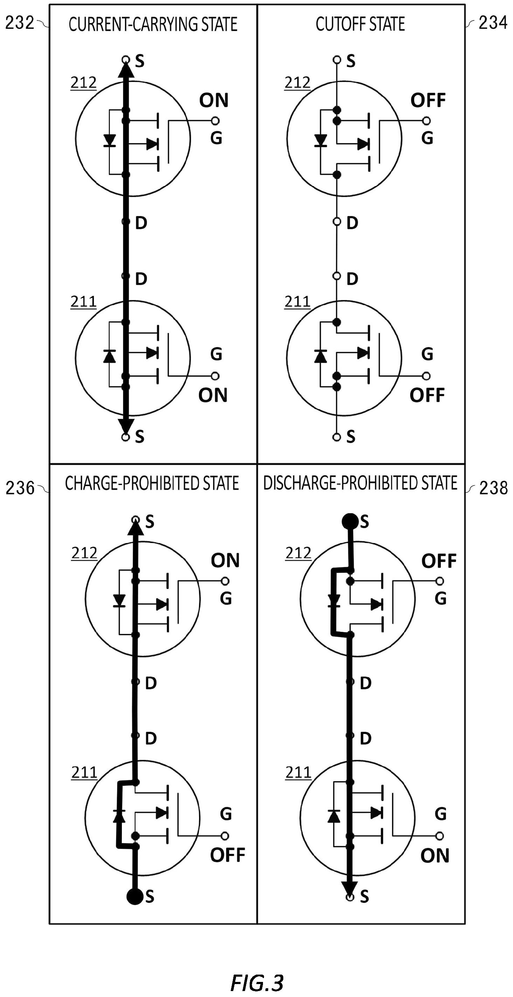

FIG. 3 is an explanatory diagram to describe a state of the switching unit 210. When both the FET 211 and the FET 212 are turned on, the switching unit 210 enters a current-carrying state 232. When both the FET 211 and the FET 212 are turned off, the switching unit 210 enters a cutoff state 234. When the FET 211 is turned off and the FET 212 is turned on, the switching unit 210 enters a charge-prohibited state 236. When the FET 211 is turned on and the FET 212 is turned off, the switching unit 210 enters a discharge-prohibited state 238.

The management unit 110 may, by controlling the boost device 280, switch a state of the switching unit 210 among the current-carrying state, a discharge state, the charge-prohibited state, and the discharge-prohibited state.

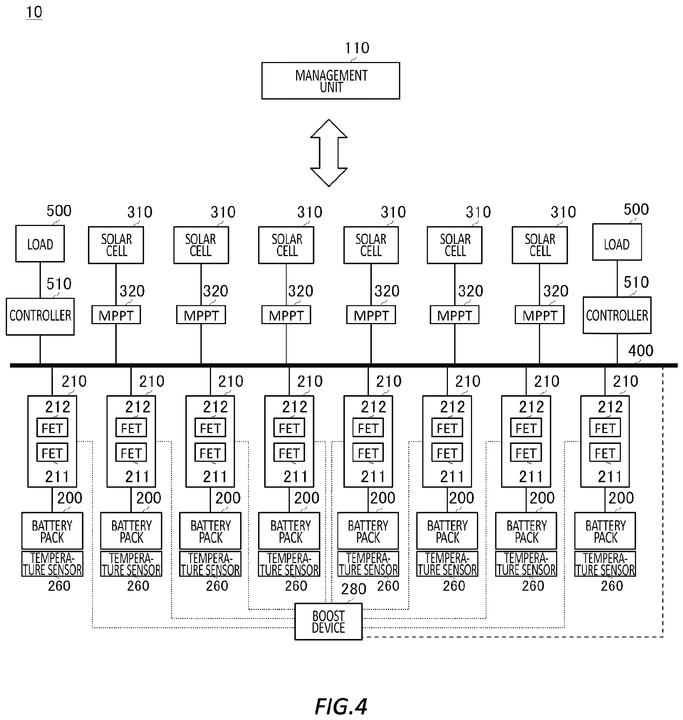

FIG. 4 schematically shows an example of the system 10. In the example shown in FIG. 4, the plurality of switching units 210 are connected in parallel to the bus 400, and the plurality of battery packs 200 are respectively connected to the plurality of switching units 210. In addition, one boost device 280 is connected to the bus 400 and the plurality of switching units 210. The boost device 280 can boost power from the bus 400, and supply the power for control to the plurality of switching units 210.

In addition, a plurality of solar cells 310 are connected to the bus 400 via MPPTs (Maximum Power Point Tracking) 320. A solar cell 310 may be an example of the power generation unit 300. In addition, the plurality of loads 500 are connected to the bus 400 via a controller 510. Here, a load 500 on the left side that is arranged on the left side of the bus 400, and a load 500 on the right side that is arranged on the right side of the bus 400 are illustrated. In addition, the plurality of temperature sensors 260 are respectively arranged for the plurality of battery packs 200. It should be noted that the system 10 may not include the plurality of temperature sensors 260.

When the battery packs 200 are separately described, from the left side to the right side, the battery packs may be referred to as a battery pack A, a battery pack B, a battery pack C, a battery pack D, a battery pack E, a battery pack F, a battery pack G, and a battery pack H.

The management unit 110 may have a cutoff mode in which the plurality of battery packs 200 are electrically disconnected from the bus 400, a charging mode in which one or more battery packs 200 are charged, and a discharging mode in which one or more battery packs 200 are discharged. In a case of the cutoff mode, the management unit 110 brings the plurality of switching units 210 into the cutoff state 234. In a case of the charging mode, the management unit 110 may bring the switching unit 210 connected to the battery pack 200 to be charged, into the discharge-prohibited state 238. In a case of the discharging mode, the management unit 110 may bring the switching unit 210 connected to the battery pack 200 to be discharged, into the charge-prohibited state 236.

The management unit 110 may switch among the cutoff mode, the charging mode, and the discharging mode in accordance with a directive from an administrator of the system 10 or the like. The management unit 110 may automatically switch among the cutoff mode, the charging mode, and the discharging mode.

For example, the management unit 110 enters the charging mode in accordance with a predetermined schedule. For example, the management unit 110 enters the charging mode during a time of day in which sunlight reaches the solar cell 310. The management unit 110 may be configured to enter the charging mode when the solar cell 310 starts generating power. The management unit 110 may also be configured to enter the charging mode when an amount of power generated by the solar cell 310 exceeds a predetermined threshold value.

In a case of the charging mode, the management unit 110 performs management such that one or more battery packs 200 are charged with power generated by the plurality of solar cells 310. The management unit 110 may bring one or more switching units 210 into the discharge-prohibited state 238 such that one or more battery packs 200 are charged. The management unit 110, for example, brings all of the plurality of switching units 210 into the discharge-prohibited state 238 such that all of the plurality of battery packs 200 are charged.

When multiple battery packs of the plurality of battery packs 200 are charged, if multiple switching units 210 connected to the multiple battery packs 200 to be charged are brought into the current-carrying state 232, in a case where a voltage difference between the plurality of battery packs 200 is large, a current may flow from the battery pack 200 having a higher voltage to the battery pack 200 having a lower voltage, which may accelerate a charging rate of the latter and accelerate deterioration of the latter. In contrast, when charging multiple battery packs of the plurality of battery packs 200, the management unit 110 may control the boost device 280 to bring multiple switching units 210 connected to the multiple battery packs 200 to be charged, into the discharge-prohibited state 238. This makes it possible to prevent a current from flowing between the plurality of battery packs 200 while charging the plurality of battery packs 200, thereby contributing to reducing deterioration of the battery packs 200.

When charging the multiple battery packs of the plurality of battery packs 200, the management unit 110 may perform management that is based on a voltage difference between the multiple battery packs 200 to be charged. For example, the management unit 110 performs management such that, if the voltage difference between the multiple battery packs 200 to be charged is greater than a predetermined threshold value, the charge FET is turned on and the discharge FET is turned off for each of multiple switching units 210 connected to the multiple battery packs so as to bring the switching unit into the discharge-prohibited state 238, and if the voltage difference is smaller than the threshold value, the charge FET and the discharge FET are turned on for each of the multiple switching units 210 so as to bring the switching unit into the current-carrying state 232. The management unit 110 may perform management such that, if a voltage difference between the battery pack 200 with a maximum voltage and the battery pack 200 with a minimum voltage among the multiple battery packs 200 to be charged is greater than a predetermined threshold value, the charge FET is turned on and the discharge FET is turned off for each of the multiple switching units 210 so as to bring the switching unit into the discharge-prohibited state 238, and if the voltage difference is smaller than the threshold value, the charge FET and the discharge FET are turned on for each of the multiple switching units 210 so as to bring the switching unit into the current-carrying state 232. This makes it possible to, if the voltage difference between the plurality of battery packs 200 is large, prevent a current from flowing among the plurality of battery packs 200 by bringing the plurality of switching units 210 into the discharge-prohibited state 238, and to, in a case of a state in which the voltage difference is small and a current does not flow or is unlikely to flow between the plurality of battery packs 200 in the first place, achieve efficient charging by bringing the plurality of switching units 210 into the current-carrying state 232 so as to transmit power to the battery packs 200 without the use of parasitic diodes.

When the plurality of battery packs 200 are charged, if the switching units 210 are continuously kept in the current-carrying state 232 for a long period of time, the battery packs 200 may become hot due to heat generation caused by discharging, which may accelerate deterioration of the battery packs 200. In contrast, the management unit 110 obtains, by using a temperature sensor 260, a temperature of each of the plurality of battery packs 200, and, when a temperature of a battery pack 200 that is in the current-carrying state 232 has reached a preset temperature, controls the boost device 280 to bring the switching unit 210 connected to the battery pack 200 into the discharge-prohibited state 238. As a specific example, the management unit 110, for example, first brings the switching unit 210 connected to each of the battery pack A, the battery pack B, the battery pack C, and the battery pack D into the current-carrying state 232, and brings the switching unit 210 connected to each of the battery pack E, the battery pack F, the battery pack G, and the battery pack H into the cutoff state 234. The management unit 110 continually obtains and monitors a temperature of each of the battery pack A, the battery pack B, the battery pack C, and the battery pack D. For example, when the temperature of the battery pack A has reached a preset temperature, the management unit 110 controls the boost device 280 to bring the switching unit 210 connected to the battery pack A into the discharge-prohibited state 238 and to bring the switching unit 210 connected to the battery pack E into the current-carrying state 232. This makes it possible to prevent the plurality of battery packs 200 from becoming hot while charging the battery packs 200, thereby contributing to reducing deterioration of the battery packs 200. In addition, since it is possible to prevent the battery packs 200 from becoming hot, an amount of heat dissipation member used for the battery packs 200 can be reduced, thereby contributing to weight reduction of the battery packs 200.

When controlling the boost device 280 to change a state of the switching unit 210 from the discharge-prohibited state 238 to the current-carrying state 232, the management unit 110 may determine a target to be switched, based on a temperature. Specifically, for example, the management unit 110 may obtain temperatures of the plurality of battery packs 200, and control the boost device 280 to change the switching unit 210 connected to the battery pack 200, a temperature of which has reached a preset temperature on the lower-limit side, from the discharge-prohibited state 238 to the current-carrying state 232. As a specific example, situations are assumed, from a situation in which the switching unit 210 connected to each of the battery pack A, the battery pack B, the battery pack C, and the battery pack D is in the current-carrying state 232, and the switching unit 210 connected to each of the battery pack E, the battery pack F, the battery pack G, and the battery pack H is in the cutoff state 234, to a situation in which, through the above-described processing, the switching unit 210 connected to each of the battery pack A, the battery pack B, the battery pack C, and the battery pack D is switched into the discharge-prohibited state 238, and the switching unit 210 connected to each of the battery pack E, the battery pack F, the battery pack G, and the battery pack H is switched into the current-carrying state 232. In such a situation, when returning the switching unit 210 connected to any of the battery pack A, the battery pack B, the battery pack C, or the battery pack D from the discharge-prohibited state 238 back to the current-carrying state 232, the management unit 110 returns the switching unit 210 connected to the battery pack 200, among the battery pack A, the battery pack B, the battery pack C, and the battery pack D, a temperature of which has reached a preset temperature on the lower-limit side, from the discharge-prohibited state 238 back to the current-carrying state 232.

It should be noted that the management unit 110 may manage the battery pack 200 based on a voltage difference and a temperature. As a specific example, the management unit 110, when charging some battery packs 200 of the plurality of battery packs 200, if a voltage difference between the some battery packs 200 is greater than a predetermined threshold value, brings each of multiple switching units 210 connected to the some battery packs 200 into the discharge-prohibited state 238, and if the voltage difference is smaller than the threshold value, brings each of the multiple switching units 210 into the current-carrying state 232. And the management unit 110 may, when bringing each of the multiple switching units 210 into the current-carrying state 232, obtain and monitor temperatures of the some battery packs 200 connected to the multiple switching units 210, and control the boost device 280 to bring the switching unit 210 connected to the battery pack 200, among the some battery packs 200, a temperature of which has reached a preset temperature, into the discharge-prohibited state 238, and to bring the switching unit 210 connected to any of some other battery packs 200 of the plurality of battery packs 200, into the current-carrying state 232.

In the example shown in FIG. 4, the management unit 110 may perform management such that, when all of the eight switching units 210 are brought into the discharge-prohibited state 238, if a voltage difference between the battery pack with a maximum voltage and the battery pack with a minimum voltage among eight battery packs 200 is greater than a predetermined threshold value, the charge FET is turned on and the discharge FET is turned off for each of the eight switching units 210, and if the voltage difference is smaller than the threshold value, the charge FET and the discharge FET are turned on for each of the eight switching units 210.

The management unit 110 may, when charging multiple battery packs of the plurality of battery packs 200, perform management using temperatures of the multiple battery packs 200 to be charged and two threshold values, a first charging temperature threshold value and a second charging temperature threshold value that is lower than the first charging temperature threshold value (the first charging temperature threshold value may be referred to as a high-temperature-side charging threshold value, and the second charging temperature threshold value may be referred to as a low-temperature-side charging threshold value). For example, the management unit 110 first, by bringing each of multiple switching units 210 connected to the multiple battery packs 200 to be charged, into the current-carrying state 232, charges the multiple battery packs 200. The management unit 110 continually obtains and monitors a temperature of each of the multiple battery packs 200. The management unit 110 switches the switching unit 210 connected to the battery pack 200, among the multiple battery packs 200, a temperature of which has increased to reach the high-temperature-side charging threshold value, into the discharge-prohibited state 238. The management unit 110 continually obtains and monitors a temperature of the battery pack 200 connected to the switching unit 210 switched into the discharge-prohibited state 238, and when the temperature has decreased to reach the low-temperature-side charging threshold value, switches the switching unit 210 connected to the battery pack 200 into the current-carrying state 232. This makes it possible to prevent the plurality of battery packs 200 from becoming hot while charging the battery packs 200, thereby contributing to reducing deterioration of the battery packs 200. In addition, since it is possible to prevent the battery packs 200 from becoming hot, an amount of heat dissipation member used for the battery packs 200 can be reduced, thereby contributing to weight reduction of the battery packs 200.

For example, the management unit 110 enters the discharging mode in accordance with a predetermined schedule. For example, the management unit 110 enters the discharging mode during a time of day in which the load 500 is used.

In a case of the discharging mode, the management unit 110 may control the plurality of switching units 210 to cause the plurality of battery packs 200 to be discharged such that a discharging rate of each of the plurality of battery packs 200 are higher than in a case where all of the plurality of battery packs 200 are discharged.

The management unit 110, for example, controls the plurality of switching units 210 to cause the plurality of battery packs 200 to be discharged one by one in order. For example, the management apparatus 100 controls the plurality of switching units 210 such that the battery pack A, the battery pack B, the battery pack C, the battery pack D, the battery pack E, the battery pack F, the battery pack G and the battery pack H are discharged in this order repeatedly. The order is not limited to this, and may be another order. Alternatively, the management apparatus 100, for example, controls the plurality of switching units 210 to cause the battery pack 200 with a higher voltage among the plurality of battery packs 200 to be sequentially discharged with priority. In this way, by causing the eight battery packs 200 to be discharged one by one in order, it is possible to make a discharging rate of the battery packs 200 eight times as large as in a case where all of the eight battery packs 200 are discharged.

The management unit 110, for example, controls the plurality of switching units 210 to cause the plurality of battery packs 200 to be discharged in order in groups of a plurality. The management unit 110, for example, controls the plurality of switching units 210 to cause the plurality of battery packs 200 to be discharged two at a time in order. When causing the plurality of battery packs 200 to be discharged two at a time in order, the management unit 110 may divide the plurality of battery packs 200 into two groups, and control the plurality of switching units 210 to cause one battery pack 200 for each group to be discharged in order. For example, in the example shown in FIG. 4, the management unit 110 divides the plurality of battery packs 200 into two groups, left and right. Specifically, the management unit 110 divides into a group consisting of the battery pack A, the battery pack B, the battery pack C, and the battery pack D, and a group consisting of the battery pack E, the battery pack F, the battery pack G, and the battery pack H. And the management unit 110 controls the plurality of switching units 210 to cause one for each group to be discharged in order. For example, the management unit 110 causes discharge in a symmetrical order, such as in an order of the battery pack A and the battery pack H, the battery pack B and the battery pack G, the battery pack C and the battery pack F, and the battery pack D and the battery pack E. It should be noted that the order is not limited to this, and the management unit 110 may cause discharge in another order.

When multiple battery packs of the plurality of battery packs 200 are discharged, if multiple switching units 210 connected to the multiple battery packs 200 to be discharged are brought into the current-carrying state 232, in a case where the voltage difference between the plurality of battery packs 200 is large, a current may flow from the battery pack 200 having a higher voltage to the battery pack 200 having a lower voltage, which may accelerate a discharging rate of the former and accelerate deterioration of the former. In contrast, when discharging multiple battery packs of the plurality of battery packs 200, the management unit 110 may control the boost device 280 to bring multiple switching units 210 connected to the multiple battery packs 200 to be discharged, into the charge-prohibited state 236. This makes it possible to prevent a current from flowing between the plurality of battery packs 200 while performing discharge from the plurality of battery packs 200, thereby contributing to reducing deterioration of the battery packs 200.

When discharging the multiple battery packs of the plurality of battery packs 200, the management unit 110 may perform management that is based on a voltage difference between the multiple battery packs 200 to be discharged. For example, the management unit 110 performs management such that, if the voltage difference between the multiple battery packs 200 to be discharged is greater than a predetermined threshold value, the discharge FET is turned on and the charge FET is turned off for each of multiple switching units 210 connected to the multiple battery packs 200 so as to bring the switching unit into the charge-prohibited state 236, and if the voltage difference is smaller than the threshold value, the discharge FET and the charge FET are turned on for each of the multiple switching units 210 so as to bring the switching unit into the current-carrying state 232. The management unit 110 may perform management such that, if a voltage difference between the battery pack with a maximum voltage and the battery pack with a minimum voltage among the multiple battery packs 200 to be discharged is greater than a predetermined threshold value, the discharge FET is turned on and the charge FET is turned off for each of the multiple switching units 210 so as to bring the switching unit into the charge-prohibited state 236, and if the voltage difference is smaller than the threshold value, the discharge FET and the charge FET are turned on for each of the multiple switching units 210 so as to bring the switching unit into the current-carrying state 232. This makes it possible to, if the voltage difference between the plurality of battery packs 200 is large, prevent a current from flowing among the plurality of battery packs 200 by bringing the plurality of switching units 210 into the charge-prohibited state 236, and to, in a case of a state in which the voltage difference is small and a current does not flow or is unlikely to flow between the plurality of battery packs 200 in the first place, achieve efficient discharging by bringing the plurality of switching units 210 into the current-carrying state 232 so as to transmit power to the battery packs 200 without the use of parasitic diodes.

When the plurality of battery packs 200 are discharged, if the switching units 210 are continuously kept in the current-carrying state 232 for a long period of time, the battery packs 200 may become hot, which may accelerate deterioration of the battery packs 200. In contrast, the management unit 110 may obtain, by using the temperature sensor 260, a temperature of each of the plurality of battery packs 200, and, when a temperature of a battery pack 200 that is in the current-carrying state 232 has reached a preset temperature, control the boost device 280 to bring the switching unit 210 connected to the battery pack 200 into the discharge-prohibited state 238 or the cutoff state 234, and control the boost device 280 to bring the switching unit 210 connected to another battery pack 200 into the current-carrying state 232. Now, description will be made taking, as an example, a case where the battery pack A, the battery pack B, the battery pack C, the battery pack D, the battery pack E, the battery pack F, the battery pack G, and the battery pack H are discharged two at a time. The management unit 110, for example, first brings the switching unit 210 connected to each of the battery pack A and the battery pack H into the current-carrying state 232, and brings the switching unit 210 connected to each of the battery pack B, the battery pack C, the battery pack D, the battery pack E, the battery pack F, and the battery pack G into the cutoff state 234. The management unit 110 obtains and monitors a temperature of each of the battery pack A and the battery pack H. For example, when the temperature of the battery pack A has reached a preset temperature, the management unit 110 brings the switching unit 210 connected to the battery pack A into the discharge-prohibited state 238 or the cutoff state 234, and brings the switching unit 210 connected to any of the battery pack B, the battery pack C, or the battery pack D into the current-carrying state 232. For example, when the temperature of the battery pack H has reached a preset temperature, the management unit 110 brings the switching unit 210 connected to the battery pack H into the discharge-prohibited state 238 or the cutoff state 234, and brings the switching unit 210 connected to any of the battery pack E, the battery pack F, or the battery pack G into the current-carrying state 232. In this way, in response to the temperature of the battery pack 200 being discharged reaching a preset temperature, the management unit 110 switches the battery pack 200 to be discharged. This makes it possible to prevent the plurality of battery packs 200 from becoming hot while performing discharge from the battery packs 200, thereby contributing to reducing deterioration of the battery packs 200. In addition, since it is possible to prevent the battery packs 200 from becoming hot, an amount of heat dissipation member used for the battery packs 200 can be reduced, thereby contributing to weight reduction of the battery packs 200.

When controlling the boost device 280 to change a state of the switching unit 210 from the current-carrying state 232 to the discharge-prohibited state 238, the management unit 110 may determine a target to be switched, based on a temperature. Specifically, for example, the management unit 110 may obtain temperatures of the plurality of battery packs 200, and control the boost device 280 to change the switching unit 210 connected to the battery pack 200, a temperature of which has reached a preset temperature, from the current-carrying state 232 to the discharge-prohibited state 238 or the cutoff state 234. For example, when bringing the switching unit 210 connected to the battery pack A into the discharge-prohibited state 238 and bringing the switching unit 210 connected to any of the battery pack B, the battery pack C, or the battery pack D into the current-carrying state 232, the management unit 110 obtains temperatures of the battery pack B, the battery pack C, and the battery pack D, and controls the boost device 280 to change the switching unit 210 connected to the battery pack 200, among the battery pack B, the battery pack C, and the battery pack D, a temperature of which has reached a preset temperature, from the current-carrying state 232 to the discharge-prohibited state 238 or the cutoff state 234.

It should be noted that the management unit 110 may manage the battery pack 200 based on a voltage difference and a temperature. As a specific example, the management unit 110, when discharging some battery packs 200 of the plurality of battery packs 200, if a voltage difference between the some battery packs 200 is greater than a predetermined threshold value, brings each of multiple switching units 210 connected to the some battery packs 200 into the charge-prohibited state 236, and if the voltage difference is smaller than the threshold value, brings each of the multiple switching units 210 into the current-carrying state 232. The management unit 110, when bringing each of the multiple switching units 210 into the current-carrying state 232, obtains and monitors temperatures of the some battery packs 200 connected to the multiple switching units 210, and brings the switching unit 210 connected to the battery pack 200, among the some battery packs 200, a temperature of which has reached a preset temperature, into the discharge-prohibited state 238 or the cutoff state 234, and brings the switching unit 210 connected to any battery pack 200 of some other battery packs 200 of the plurality of battery packs 200, into the current-carrying state 232.

In the example shown in FIG. 4, the management unit 110 may perform management such that, when all of the eight switching units 210 are brought into the charge-prohibited state 236, if a voltage difference between the battery pack with a maximum voltage and the battery pack with a minimum voltage among the eight battery packs 200 is greater than a predetermined threshold value, the discharge FET is turned on and the charge FET is turned off for each of the eight switching units 210, and if the voltage difference is smaller than the threshold value, the discharge FET and the charge FET are turned on for each of the eight switching units 210.

When discharging multiple battery packs of the plurality of battery packs 200, the management unit 110 may perform management using temperatures of the multiple battery packs 200 to be discharged and two threshold values: a first discharging temperature threshold value and a second discharging temperature threshold value that is lower than the first discharging temperature threshold value (the first discharging temperature threshold value may be referred to as a high-temperature-side discharging threshold value, and the second discharging temperature threshold value may be referred to as a low-temperature-side discharging threshold value). For example, the management unit 110 first, by bringing each of multiple switching units 210 connected to the multiple battery packs 200 to be discharged, into the current-carrying state 232, discharges the multiple battery packs 200. The management unit 110 continually obtains and monitors a temperature of each of the multiple battery packs 200. The management unit 110 switches the switching unit 210 connected to the battery pack 200, among the multiple battery packs 200, a temperature of which has increased to reach the high-temperature-side discharging threshold value, into the discharge-prohibited state 238 or the cutoff state 234. The management unit 110 continually obtains and monitors a temperature of the battery pack 200 connected to the switching unit 210 switched into the discharge-prohibited state 238 or the cutoff state 234, and when the temperature has decreased to reach the low-temperature-side discharging threshold value, switches the switching unit 210 connected to the battery pack 200 into the current-carrying state 232. This makes it possible to prevent the plurality of battery packs 200 from becoming hot while performing discharge from the battery packs 200, thereby contributing to reducing deterioration of the battery packs 200. In addition, since it is possible to prevent the battery packs 200 from becoming hot, an amount of heat dissipation member used for the battery packs 200 can be reduced, thereby contributing to weight reduction of the battery packs 200. The first discharging temperature threshold value and the second discharging temperature threshold value may be the same as or different from the first charging temperature threshold value and the second charging temperature threshold value.

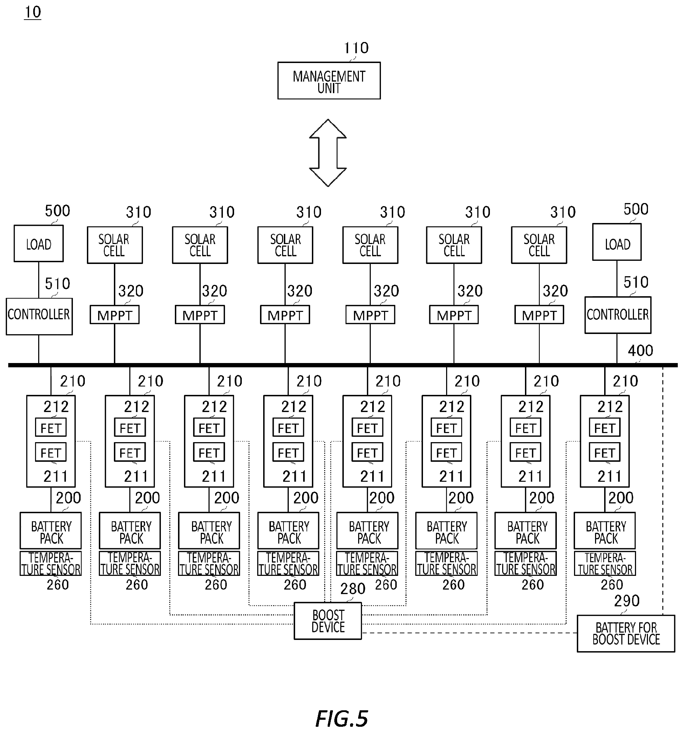

FIG. 5 schematically shows an example of the system 10. Here, differences from FIG. 4 will be mainly described. The system 10 shown in FIG. 5 includes a battery for boost device 290, and the boost device 280 boosts power from the battery for boost device 290, and supplies the power for control to the plurality of switching units 210. When the system 10 includes one boost device 280, the one boost device 280 may boost the power from the battery for boost device 290, and supply the power for control to all of the plurality of switching units 210. When the system 10 includes a plurality of boost devices 280, the plurality of boost devices 280 are connected to the battery for boost device 290, and at least one boost device 280 boosts the power from the battery for boost device 290, and supplies the power for control to two or more switching units 210.

In the example shown in FIG. 5, the battery for boost device 290 is connected to the bus 400. The battery for boost device 290 may be charged with power generated by the solar cell 310.

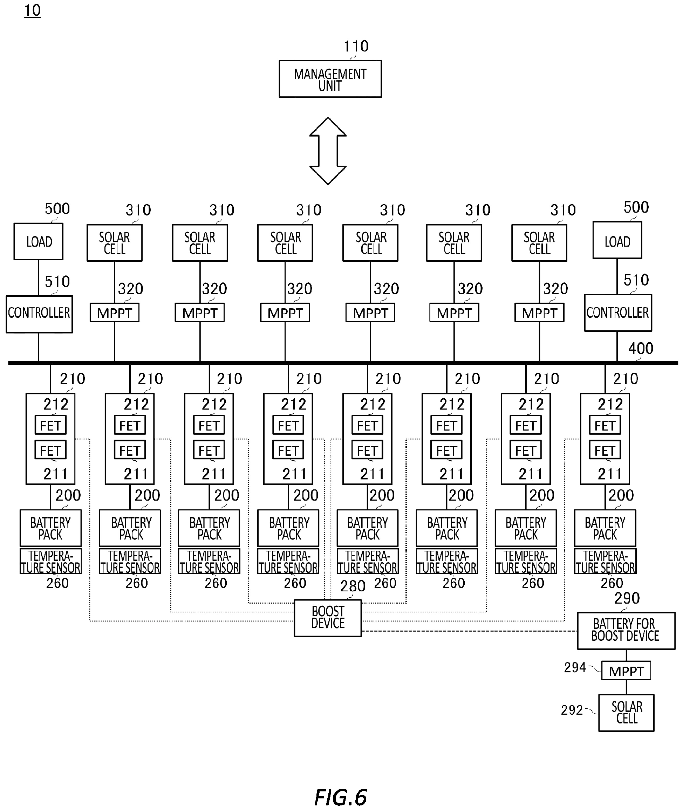

FIG. 6 schematically shows an example of the system 10. Here, differences from FIG. 5 will be mainly described. In the system 10 shown in FIG. 6, a solar cell 292 is connected to the battery for boost device 290 via an MPPT 294. The battery for boost device 290 may be charged with power generated by the solar cell 292.

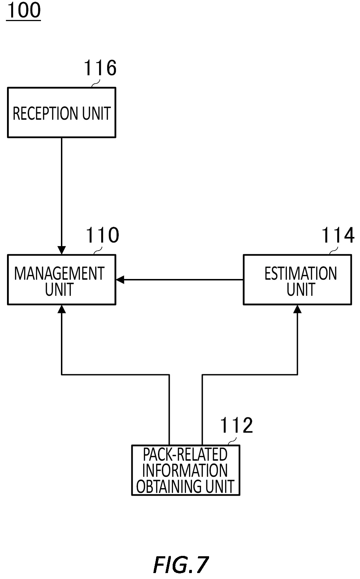

FIG. 7 schematically shows an example of a functional configuration of the management apparatus 100. The management apparatus 100 may include the management unit 110, a pack-related information obtaining unit 112, an estimation unit 114, and a reception unit 116. It should be noted that it is not necessarily essential that the management apparatus 100 includes all of these.

The management unit 110 manages charging and discharging of the plurality of battery packs 200 by using the boost device 280.

When charging multiple battery packs of the plurality of battery packs 200, the management unit 110 may control the boost device 280 to bring multiple switching units 210 connected to the multiple battery packs 200 to be charged, into the discharge-prohibited state 238.

The management unit 110 may perform management such that, when multiple battery packs of the plurality of battery packs 200 are charged, if a voltage difference between the multiple battery packs 200 to be charged is greater than a predetermined threshold value, the charge FET is turned on and the discharge FET is turned off for each of multiple switching units 210 connected to the multiple battery packs 200, and if the voltage difference is smaller than the threshold value, the charge FET and the discharge FET are turned on for each of the multiple switching units 210.

In addition, for example, the management unit 110, when charging some battery packs 200 of the plurality of battery packs 200, if a voltage difference between the some battery packs 200 is greater than a predetermined threshold value, turns on the charge FET and turns off the discharge FET for each of multiple switching units 210 connected to the some battery packs 200 so as to bring the switching unit into the discharge-prohibited state 238, and if the voltage difference is smaller than the threshold value, turns on the charge FET and the discharge FET for each of the multiple switching units 210 so as to bring the switching unit into the current-carrying state 232. The management unit 110, when bringing the multiple switching units 210 into the current-carrying state 232, obtains and monitors temperatures of the some battery packs 200 connected to the multiple switching units 210, and controls the boost device 280 to bring the switching unit 210 connected to the battery pack 200, among the some battery packs 200, a temperature of which has reached a preset temperature, into the discharge-prohibited state 238, and to bring the switching unit 210 connected to any of some other battery packs 200 of the plurality of battery packs 200 into the current-carrying state 232.

In addition, for example, the management unit 110 brings some switching units 210 connected to some battery packs 200 of the plurality of battery packs 200 into the current-carrying state 232 and brings some other switching units 210 connected to some other battery packs 200 of the plurality of battery packs 200 into the cutoff state 234, obtains and monitors temperatures of the some battery packs 200 during charging of the some battery packs 200, brings the switching unit 210 connected to a battery pack 200, among the some battery packs 200, a temperature of which has reached a preset temperature, into the discharge-prohibited state 238, and brings the switching unit 210 connected to any of the some other battery packs 200 into the current-carrying state 232.

In addition, for example, the management unit 110, when charging multiple battery packs of the plurality of battery packs 200, brings multiple switching units 210 connected to the multiple battery packs 200 to be charged, into the current-carrying state 232, obtains and monitors a temperature of each of the multiple battery packs 200, switches the switching unit 210 connected to the battery pack 200, among the multiple battery packs 200, a temperature of which has increased to reach a preset first charging temperature threshold value, into the discharge-prohibited state 238, continually obtains and monitors a temperature of the battery pack 200 connected to the switching unit 210 switched into the discharge-prohibited state 238, and when the temperature has decreased to reach a second charging temperature threshold value that is lower than the first charging temperature threshold value, switches the switching unit 210 connected to the battery pack 200 into the current-carrying state 232. That is, the management unit 110 may continually perform such control that, when a battery pack 200 is charged, if a temperature of the battery pack 200 is lower than the first charging temperature threshold value, the switching unit 210 connected to the battery pack 200 is brought into the current-carrying state 232; when the temperature has reached the first charging temperature threshold value, the switching unit 210 is switched into the discharge-prohibited state 238; and when the temperature has decreased to reach the second charging temperature threshold value, the switching unit 210 is switched into the current-carrying state 232. This makes it possible to achieve efficient charging when the temperature of the battery pack 200 is low while preventing the temperature of the battery pack 200 from becoming too high.

When discharging the plurality of battery packs 200, the management unit 110 may control the plurality of switching units 210 to cause the plurality of battery packs 200 to be alternately discharged such that a discharging rate of each of the plurality of battery packs 200 is higher than in a case where all of the plurality of battery packs 200 are discharged.

When discharging multiple battery packs of the plurality of battery packs 200, the management unit 110 may control the boost device 280 to bring multiple switching units 210 connected to the multiple battery packs 200 to be discharged, into the charge-prohibited state 236.

The management unit 110 may perform management such that, when multiple battery packs of the plurality of battery packs 200 are discharged, if a voltage difference between the multiple battery packs 200 to be discharged is greater than a predetermined threshold value, the discharge FET is turned on and the charge FET is turned off for each of multiple switching units 210 connected to the multiple battery packs 200, and if the voltage difference is smaller than the threshold value, the discharge FET and the charge FET are turned on for each of the multiple switching units 210.

In addition, for example, the management unit 110, when discharging some battery packs 200 of the plurality of battery packs 200, if a voltage difference between the some battery packs 200 is greater than a predetermined threshold value, brings each of multiple switching units 210 connected to the some battery packs 200, into the charge-prohibited state 236, and if the voltage difference is smaller than the threshold value, brings each of the multiple switching units 210 into a current-carrying state 232, and when bringing each of the multiple switching units 210 into the current-carrying state 232, obtains and monitors temperatures of the some battery packs 200 connected to the multiple switching units 210, brings the switching unit 210 connected to a battery pack 200, among the some battery packs 200, a temperature of which has reached a preset temperature, into the discharge-prohibited state 238, and brings the switching unit 210 connected to any battery pack 200 of some other battery packs 200 of the plurality of battery packs 200 into the current-carrying state.

In addition, for example, the management unit 110, when bringing some battery packs 200 of the plurality of battery packs 200 into the current-carrying state 232 and bringing some other battery packs 200 of the plurality of battery packs 200 into the cutoff state 234, and causing the some battery packs 200 to be discharged, obtains and monitors temperatures of the some battery packs 200, and in response to a temperature of any battery pack 200 of the some battery packs 200 reaching a preset temperature, brings the switching unit 210 connected to the battery pack 200 into the discharge-prohibited state 238, and brings the switching unit 210 connected to any of the some other battery packs 200 into the current-carrying state 232.

In addition, for example, the management unit 110, when discharging multiple battery packs of the plurality of battery packs 200, brings multiple switching units 210 connected to the multiple battery packs 200 to be discharged into the current-carrying state 232, obtains and monitors a temperature of each of the multiple battery packs 200, switches the switching unit 210 connected to the battery pack 200, among the multiple battery packs 200, a temperature of which has increased to reach a preset first discharging temperature threshold value, into the discharge-prohibited state or the cutoff state, continually obtains and monitors a temperature of the battery pack 200 connected to the switching unit 210 switched into the discharge-prohibited state 238 or the cutoff state 234, and when the temperature has decreased to reach a second discharging temperature threshold value that is lower than the first discharging temperature threshold value, switches the switching unit 210 connected to the battery pack 200 into the current-carrying state 232. That is, the management unit 110 may continually perform such control that, when a battery pack 200 is discharged, if a temperature of the battery pack 200 is lower than the first discharging temperature threshold value, the switching unit 210 connected to the battery pack 200 is brought into the current-carrying state 232; when the temperature has increased to reach the first discharging temperature threshold value, the switching unit 210 is switched into the discharge-prohibited state 238 or the cutoff state 234; and when the temperature has decreased to reach the second discharging temperature threshold value, the switching unit 210 is switched into the current-carrying state 232. This makes it possible to achieve efficient discharging when the temperature of the battery pack 200 is low while preventing the temperature of the battery pack 200 from becoming too high.

The pack-related information obtaining unit 112 obtains pack-related information related to the battery pack 200 for each of the plurality of battery packs 200. For example, the pack-related information obtaining unit 112 obtains information detected by a sensor that is arranged for each of the plurality of battery packs 200, as pack-related information, from the sensor.

The pack-related information may include an OCV (Open Circuit Voltage) of the battery pack 200. The pack-related information may include a CCV (Closed Circuit Voltage) of the battery pack 200. The pack-related information may include a DCIR (Direct Current Internal Resistence) of the battery pack 200. The pack-related information may include an SOH (State of Health) of the battery pack 200. The pack-related information may include an SOC (State Of Charge) of the battery pack 200. The pack-related information may include a current value of the battery pack 200. The pack-related information may include a discharge duration of the battery pack 200. The pack-related information may include an accumulated capacity of the battery pack 200. The pack-related information may include a temperature of the battery pack 200.

The estimation unit 114 estimates a state of the battery pack 200 based on the pack-related information obtained by the pack-related information obtaining unit 112. The estimation unit 114 may perform estimation by using an estimation method that is used in the existing BMS (Battery Management System).

For example, the estimation unit 114 stores a relationship between the SOC and the DCIR of the battery pack 200 to estimate the OCV of the battery pack 200 based on the DCIR, the SOH, the current value, the discharge duration, the CCV, and the accumulated capacity that are stored.

In addition, for example, the estimation unit 114 first estimates an SOC and an SOH before starting the discharge based on an OCV, a current value, a discharge duration, a CCV, an accumulated capacity, and the temperature before starting the discharge. Then, the estimation unit 114 uses the data to estimate a current DCIR based on the database that is previously stored. And the estimation unit 114 estimates a current OCV based on the current DCIR, the CCV, and the current value that are estimated.

The management unit 110 may specify the voltage difference between the plurality of battery packs 200 based on the OCV of each of the plurality of battery packs 200 obtained by the pack-related information obtaining unit 112. For example, the management unit 110 specifies a voltage difference between the battery pack 200 with a maximum voltage and the battery pack 200 with a minimum voltage among the plurality of battery packs 200, as the voltage difference between the plurality of battery packs 200.

In addition, the management unit 110 may specify the voltage difference between the plurality of battery packs 200 based on the OCV of each of the plurality of battery packs 200 estimated by the estimation unit 114. For example, the management unit 110 specifies a voltage difference between the battery pack 200 with a maximum voltage and the battery pack 200 with a minimum voltage among the plurality of battery packs 200, as the voltage difference between the plurality of battery packs 200.

The reception unit 116 receives various information from outside. The reception unit 116, for example, receives a control directive to the management unit 110. The management unit 110 may control the plurality of switching units 210 in accordance with the control directive received by the reception unit 116. The reception unit 116, for example, receives schedule information including a schedule for switching a mode of the management unit 110. The management unit 110 may switch among the cutoff mode, the charging mode, and the discharging mode in accordance with the schedule information received by the reception unit 116.

The reception unit 116, for example, receives weather information for an area in which the system 10 is located. The management unit 110 may control the plurality of switching units 210 based on the weather information received by the reception unit 116.

In a case of the discharging mode, the management unit 110 may control the plurality of switching units 210 to cause the plurality of battery packs 200 to be discharged one by one in order. In a case of the discharging mode, the management unit 110 may control the plurality of switching units 210 to cause the plurality of battery packs 200 to be discharged two or more at a time in order. For example, the management unit 110 controls the plurality of battery packs 200 such that they are discharged two at a time in order. Alternatively, for example, the management unit 110 controls the plurality of battery packs 200 such that they are discharged sequentially, three at a time. Alternatively, for example, the management unit 110 controls the plurality of battery packs 200 such that they are discharged sequentially, four at a time. These are only by way of example, and the management unit 110 may perform control such that an even larger number of them are discharged at a time in order.

The management unit 110 may perform such control that, for a plurality of left-side battery packs 200 and a plurality of right-side battery packs 200, a difference in voltage between the left side and the right side is not significantly biased.

For example, the management unit 110 controls the plurality of left-side battery packs 200 and the plurality of right-side battery packs 200 such that one battery pack from the left side and one battery pack from the right side are alternately discharged, such as one from the left side, one from the right side, one from the left side, and then one from the right side. By alternately discharging the left-side battery packs 200 and the right-side battery packs 200, it is possible to prevent the difference in voltage between the left side and the right side from becoming significant.

At this time, the management unit 110 may cause one battery pack from the left side and one battery pack from the right side to discharge alternately, taking into account a positional relationship between the plurality of left-side battery packs 200 and the plurality of right-side battery packs 200. For example, the management unit 110 causes one battery pack from the left side and one battery pack from the right side to discharge alternately, such as discharging a left-side battery pack 200, a right-side battery pack 200 which positionally corresponds to the left-side battery pack 200, a next left-side battery pack 200, and then a right-side battery pack 200 which positionally corresponds to the left-side battery pack 200. Positionally corresponding may be, for example, being located symmetrically. For example, the management unit 110 causes a first battery pack 200 to be discharged and then causes an eighth battery pack 200 located symmetrically with the first battery pack 200 to be discharged, causes a second battery pack 200 to be discharged and then causes a seventh battery pack 200 located symmetrically with the second battery pack 200 to be discharged, causes a third battery pack 200 to be discharged and then causes a sixth battery pack 200 located symmetrically with the third battery pack 200 to be discharged, and causes a fourth battery pack 200 to be discharged and then causes a fifth battery pack 200 located symmetrically with the fourth battery pack 200 to be discharged.

Alternatively, for example, the management unit 110 may cause one battery pack from the left side and one battery pack from the right side to be alternately discharged, not taking into account the positional relationship between the plurality of left-side battery packs 200 and the plurality of right-side battery packs 200. For example, the management unit 110 causes the first battery pack 200 to be discharged and then causes any of the fifth to eighth battery packs 200 to be discharged; causes the second battery pack 200 to be discharged and then causes any of the remaining three among the fifth to eighth battery packs 200 to be discharged; causes the third battery pack 200 to be discharged and then causes any of the remaining two among the fifth to eighth battery packs 200 to be discharged; and causes the fourth battery pack 200 to be discharged and then causes the remaining one among the fifth to eighth battery packs 200 to be discharged.

Alternatively, for example, the management unit 110 may control the plurality of switching units 210 such that respective ones from the plurality of left-side battery packs 200 and from the plurality of right-side battery packs 200 are sequentially discharged. At this time, the management unit 110 may control the plurality of switching units 210 such that the respective ones from the plurality of left-side battery packs 200 and from the plurality of right-side battery packs 200 are sequentially discharged, taking into account the positional relationship between the plurality of left-side battery packs 200 and the plurality of right-side battery packs 200. For example, the management unit 110 may control the plurality of switching units 210 such that the respective ones from the plurality of left-side battery packs 200 and from the plurality of right-side battery packs 200 are sequentially discharged in symmetrical manner.

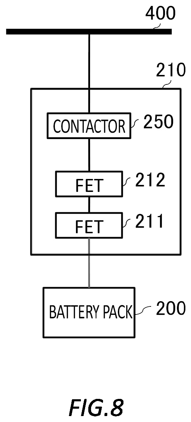

FIG. 8 schematically shows another example of a configuration of the switching unit 210. The switching unit 210 illustrated in FIG. 8 includes a contactor 250 which is arranged between the FET 211 and the FET 212, and the bus 400.

Since the FET has a lower withstand voltage than the contactor, there is a concern of a failure when an overvoltage is applied due to a direct lightning strike to the system 10 or the like, for example. When the FET is broken down due to lightning or the like, it may result in a pattern in which the current cannot be turned off or is unable to become the cutoff state, which may be referred to as a pattern A; a pattern in which the current no longer flows, which may be referred to as a pattern B; and a pattern of half-broken, which may be referred to as a pattern C. As shown in FIG. 2, when the switching unit 210 is constituted by the FET 211 and the FET 212, in a case of the pattern A, the bus 400 and the battery pack 200 are always electrically connected, which accelerates deterioration of the battery pack 200 but does not significantly affect operation of the system 10. However, in the pattern B, it will not be possible to utilize the power of the battery pack 200 and the operation of the system 10 will be significantly affected. Also, in the pattern C, since the current will flow through the FET which is of high resistance, it may generate heat and possibly catch fire. Although it is possible to prevent or reduce occurrence of such problems by adopting various kinds of another mechanism, it is desirable to address such problems also with the configuration of the plurality of switching units 210.

For example, the system 10 employs the switching unit 210 shown in FIG. 8, for some of the plurality of switching units 210. That is, the system 10 may be configured such that some of the plurality of switching units 210 each include the discharge FET and the charge FET, and some others of the plurality of switching units 210 each include the contactor 250 connected to the bus 400, and the discharge FET and the charge FET connected in series between the contactor 250 and the battery pack 200.

The management unit 110 may maintain contactors 250 of some others of the plurality of switching units 210 in an off state while a predetermined condition is satisfied. For example, the management unit 110 determines whether the predetermined condition is being satisfied based on weather information for an area where the system 10 is located, received from outside by the reception unit 116. The weather information may indicate a present weather of various locations. The weather information may also indicate a weather forecast for various locations. For example, the management unit 110 maintains the contactors 250 in the off state while the system 10 is located in an area where lightning occurs. The management unit 110 may maintain the contactors 250 in an on state when the system 10 is not located in an area where lightning occurs. The management unit 110, when maintaining the contactors 250 in the off state, during discharge, may alternately bring some of the plurality of switching units 210, among the plurality of switching units 210, that each include the discharge FET and the charge FET, into the discharge state, and when maintaining the contactors 250 in the on state, during discharge, may alternately bring all of the plurality of switching units 210 into the discharge state. An area where lightning occurs may be an area where the lightning is actually occurring or may be an area where the lightning is expected to occur.

In an area where lightning occurs, the contactors 250 are turned off, and therefore, even if by any chance lightning strikes and, for some of the plurality of switching units 210, the FETs fail and currents stop flowing, for some others of the plurality of switching units 210, the FETs can be protected. In an area where no lightning occurs, the contactor 250 is turned on, and therefore, overall, in an area where lightning occurs, it is possible to protect the discharge FET and the charge FET of the switching unit 210 constituted by the contactor 250, the discharge FET, and the charge FET, and in an area other than an area where lightning occurs, it is possible to increase tolerance to switching by performing switching not with the contactor 250 but with the discharge FET and the charge FET.

There are two types of contactors: one which turns off when a control current is applied, and one which turns on when the control current is applied. The contactor 250 according to the present embodiment may be of a type which turns off when the control current is applied. When the system 10 is located in an area where lightning occurs, the management unit 110 applies the control current to the contactor 250 of the switching unit 210 that includes the contactor 250, and turns it off. Even if by any chance lightning strikes the system 10 and even if a current stops flowing through the FET 211 and the FET 212 of the switching unit 210 that does not include the contactor 250, it is possible to protect he FET 211 and the FET 212 of the switching unit 210 that includes the contactor 250. In addition, when lightning causes a failure of a current system and a supply of electricity stops, the control current to the contactor 250 stops, the contactor 250 turns on, power from two battery packs 200 respectively connected to the switching units 210 each including the contactor 250 is supplied to the load 500 or the like, thereby allowing at least a minimum function of the system 10 to be maintained.

A ratio of the switching unit 210 constituted by the discharge FET and the charge FET to the switching unit 210 constituted by the contactor 250, the discharge FET, and the charge FET may be any ratio. For example, one switching unit 210 of the plurality of switching units 210 may be constituted by the contactor 250, the discharge FET, and the charge FET, or two switching units 210 of the plurality of switching units 210 may each be constituted by the contactor 250, the discharge FET, and the charge FET.

Alternatively, all of the plurality of switching units 210 may each be constituted by the contactor 250, the discharge FET, and the charge FET. This can further improve safety. In this case, while the system 10 is located in an area where lightning occurs, the management unit 110 may turn on the contactors 250 of only some switching units 210 among the plurality of switching units 210, and maintain the contactors 250 of any other switching units 210 in the off state. The management unit 110 may turn on only the contactors 250 of a number of the switching units 210 required to maintain the minimum function of the system 10 and maintain the contactors 250 of any other switching units 210 in the off state. All contactors 250 of the plurality of switching units 210 may be of a type which turns off when the control current is applied, and while the system 10 is located in an area where lightning occurs, the management unit 110 may turn on the contactors 250 of only some switching units 210 among the plurality of switching units 210 and apply the control current to the contactors 250 of any other switching units 210 to maintain them in the off state.

It should be noted that the system 10 may be configured such that some of the plurality of switching units 210 each include the discharge FET and the charge FET, and some others of the plurality of switching units 210 each include only the contactor 250 which switches a current between the connected battery pack 200 and the bus 400 on and off.

In this way, constituting each of some switching units 210 only by the contactor 250 makes it possible to, even if an overvoltage is applied to the system 10, prevent some switching units 210 from being destroyed and allow at least a minimum function to be maintained.

A ratio of the switching unit 210 including the discharge FET and the charge FET to the switching unit 210 including the contactor 250 may be any ratio. For example, by constituting one switching unit 210 among the plurality of switching units 210 by the contactor 250, even when the overvoltage is applied to the system 10, the function of at least one switching unit 210 and battery pack 200 can be maintained. Alternatively, for example, by constituting each of two switching units 210 among the plurality of switching units 210 by the contactor 250, redundancy can be achieved.

The above embodiment describes the contactor 250 of a type which is turned off when the control current is applied, but it is not limited thereto. The contactor 250 may be of a type which turns on when the control current is applied.

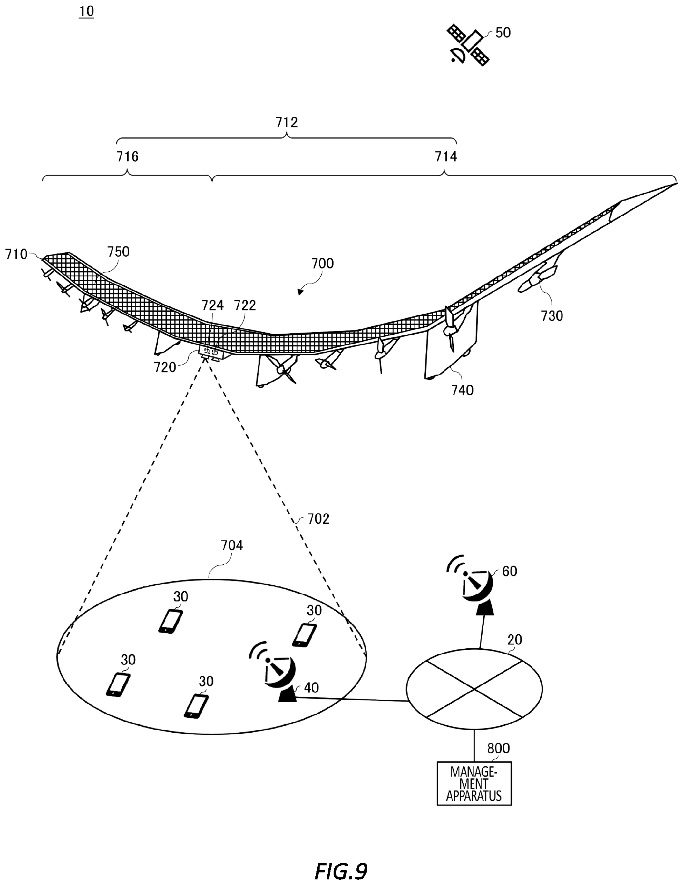

FIG. 9 schematically shows an example of a HAPS 700 on which the system 10 is mounted. The HAPS 700 is a flight vehicle that provides a wireless communication service to a user terminal 30 in a communication area 704 that is formed by emitting a beam 702 toward the ground.

The HAPS 700 includes an aircraft body 710, a central part 720, a propeller 730, a pod 740, and a solar battery panel 750. The aircraft body 710 has a wing portion 712. The wing portion 712 includes a left wing portion 714 and a right wing portion 716.

Inside the wing portion 712, the plurality of battery packs 200 which are connected in parallel are arranged. Among the plurality of battery packs 200, a plurality of battery packs 200 on the left side may be arranged in the left wing portion 714, and a plurality of battery packs 200 on the right side may be arranged in the right wing portion 716. The plurality of battery packs 200 may be connected to the bus 400 via the plurality of switching units 210. The boost device 280 may be connected to the plurality of switching units 210. The boost device 280 may be connected to the bus 400 or to the battery for boost device 290. The solar battery panel 750 may be connected to the bus 400 via an MPPT 320. The power discharged by the plurality of battery packs 200 is utilized by each component included in the HAPS 700. For example, the power discharged by the plurality of battery packs 200 is utilized by a motor of the propeller 730. The motor of the propeller 730 may be an example of the load 500.

Inside the central part 720, a flight control unit 722, a communication control unit 724, and the management apparatus 100 that is not shown are arranged. The flight control unit 722 controls the flight of the HAPS 700 by using the power discharged by the plurality of battery packs 200. The communication control unit 724 controls the communication of the HAPS 700 by using the power discharged by the plurality of battery packs 200.

The flight control unit 722 controls the flight of the HAPS 700 by controlling the rotation of the propeller 730, for example. Also, the flight control unit 722 may control the flight of the HAPS 700 by changing the angle of a flap or an elevator that are not shown. The flight control unit 722 may include various types of sensors such as a positioning sensor such as a GPS sensor, a gyro sensor, and an acceleration sensor to manage a position, a movement direction, and a movement speed of the HAPS 700.

The communication control unit 724 forms the communication area 704 on the ground by using an SL (Service Link) antenna. The communication control unit 724 forms a service link between the user terminal 30 on the ground by using the SL antenna. The SL antenna may be a multi-beam antenna. The communication area 704 may be a multi-cell.

The communication control unit 724 may form a feeder link between a gateway 40 on the ground by using an FL (Feeder Link) antenna. The communication control unit 724 may access a network 20 via the gateway 40.

The communication control unit 724 may communicate with a communication satellite 50 by using a satellite communication antenna. The communication control unit 724 may access the network 20 via the communication satellite 50 and a satellite communication station 60.

The user terminal 30 may be any communication terminal as long as it can communicate with the HAPS 700. For example, the user terminal 30 is a mobile phone such as a smartphone. The user terminal 30 may be a tablet terminal, a PC (Personal Computer), and the like. The user terminal 30 may also be a so-called IoT, or Internet of Thing, device. The user terminal 30 may include anything which corresponds to a so-called IoE, or Internet of Everything.

The HAPS 700 relays a communication between the network 20 and the user terminal 30, for example, via the feeder link or the communication satellite 50, and the service link. The HAPS 700 may provide a wireless communication service to the user terminal 30 by relaying the communication between the user terminal 30 and the network 20.

The network 20 includes a mobile communication network. The mobile communication network may conform to any of the 3G (3rd Generation) communication system, the LTE (Long Term Evolution) communication system, the 5G (5th Generation) communication system, and the 6G (6th Generation) communication system and the communication system of the subsequent generation. The network 20 may include the Internet.

For example, the HAPS 700 transmits data received from the user terminal 30 in the communication area 704 to the network 20. In addition, for example, when the HAPS 700 receives data addressed to the user terminal 30 in the communication area 704, via the network 20, the HAPS 700 transmits the data to the user terminal 30.

The HAPS 700 maintains the communication area 704 in a specific area on the ground while circulating a predetermined flight path in the stratosphere, for example. The HAPS 700 maintains the flight in the stratosphere by storing power generated by the solar battery panel 750 in the daytime in the plurality of battery packs 200, and using the power of the plurality of battery packs 200 in the evening. The HAPS 700 maintains the flight in the stratosphere by raising itself and storing potential energy while charging the plurality of battery packs 200 in the daytime and operating the propeller 730 or the like by appropriately using the power in the battery pack 200 while gradually descending in the evening, for example.

The management apparatus 800 manages a plurality of the HAPS 700. The management apparatus 800 may communicate with the HAPS 700 via the network 20 and the gateway 40. The management apparatus 800 may communicate with the HAPS 700 via the network 20, the satellite communication station 60, and the communication satellite 50.

The management apparatus 800 controls the HAPS 700 by transmitting a directive. The management apparatus 800 may cause the HAPS 700 to circle over a target area such that the target area on the ground is covered by the communication area 704. For example, the HAPS 700 maintains the feeder link with the gateway 40 by adjusting a pointing direction of the FL antenna while flying in a circular orbit over the target area, and maintains the coverage of the target area by the communication area 704 by adjusting a pointing direction of the SL antenna.

The management unit 110 of the management apparatus 100 manages charging and discharging of the plurality of battery packs 200 by using the boost device 280 and the plurality of switching units 210. By adopting a configuration in which the plurality of switching units 210 are controlled by one boost device 280 or by boost devices 280, a number of which is smaller than the number of switching units 210, a weight of the HAPS 700 can be reduced as compared with a case where boost devices 280 corresponding to respective ones of the plurality of switching units 210 are mounted.

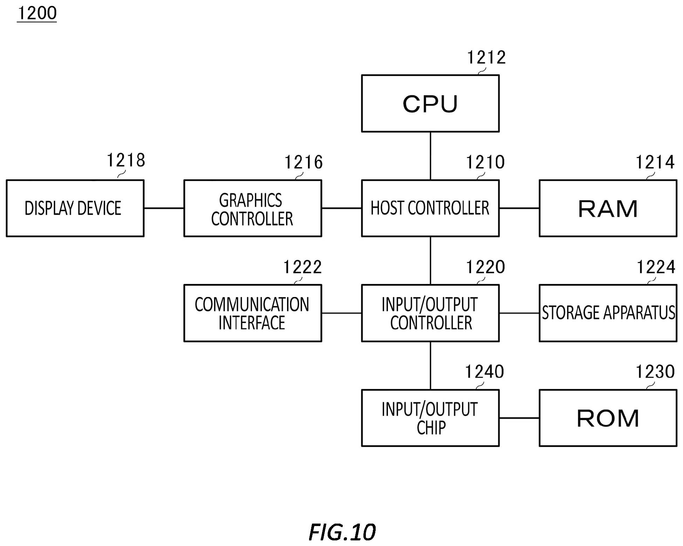

FIG. 10 schematically shows an example of a hardware configuration of a computer 1200 which functions as the management apparatus 100. Programs installed in the computer 1200 can cause the computer 1200 to function as one or more "units" of the apparatus according to the above embodiment or can cause the computer 1200 to execute operations associated with the apparatuses according to the above embodiment or said one or more "units", and/or can cause the computer 1200 to execute a process according to the above embodiment or steps of said process. Such a program may be executed by a CPU 1212 to cause the computer 1200 to perform specific operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. Also, the computer 1200 includes input/output units such as a communication interface 1222, a storage apparatus 1224, a DVD drive and an IC card drive, which are connected to the host controller 1210 via an input/output controller 1220. The storage apparatus 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates in accordance with the programs stored in the ROM 1230 and the RAM 1214, thereby controlling each unit. The graphics controller 1216 obtains image data which is generated by the CPU 1212 in a frame buffer or the like provided in the RAM 1214 or in itself so as to cause the image data to be displayed on a display device 1218.

The communication interface 1222 communicates with other electronic devices via a network. The storage apparatus 1224 stores a program and data used by the CPU 1212 in the computer 1200. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM or the IC card. The program is read from the computer-readable storage medium, installed into the storage apparatus 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage apparatus 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage apparatus 1224, the DVD drive (DVD-ROM), the IC card, etc., and perform various types of processing on the data on the RAM 1214. The CPU 1212 may then write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the said plurality of entries, and read the attribute value of the second attribute stored in the said entry, thereby obtaining the attribute value of the second attribute associated with the first attribute that satisfies a predetermined condition.

The programs or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon constitutes a product including an instruction that may be executed in order to provide means for executing an operation designated by a flowchart or a block diagram. An example of the computer-readable storage medium may include an electronic storage medium, a magnetic storage medium, an optical storage medium, an electromagnetic storage medium, a semiconductor storage medium, etc. More specific examples of computer-readable storage medium may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, etc.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like sequentially that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the embodiments of the present invention have been described, the technical scope of the present invention is not limited to the above embodiments. It is apparent to persons skilled in the art that various alterations or improvements can be added to the above embodiments. It is also apparent from the described scope of the claims that the embodiments added with such alterations or improvements can be included the technical scope of the present invention.

It should be noted that the operations, procedures, steps, stages or the like of each process performed by an apparatus, system, program, and method shown in the scope of the claims, embodiments, or diagrams can be performed in any order as long as the order is not indicated by "prior to," "before," or the like and as long as the output from a previous process is not used in a later process. Even if the process flow is described by using phrases such as "first", "then" or the like in the scope of the claims, embodiments, or diagrams, it does not necessarily mean that the process must be performed in this order.

In the present invention, since it is possible to suppress the deterioration of the battery by improving the discharging rate of the battery and to improve a battery life, it will be possible to contribute to achievement of Sustainable Development Goals, or SDGs, Goal 7 "affordable and clean energy", or Goal 13 "take concrete action to combat climate change", or the like.

### EXPLANATION OF REFERENCES

10: system; 20: network; 30: user terminal; 40: gateway; 50: communication satellite; 60: satellite communication station; 100: management apparatus; 110: management unit; 112: pack-related information obtaining unit; 114: estimation unit; 116: reception unit; 200: battery pack; 202: cell; 210: switching unit; 211: FET; 212: FET; 232: current-carrying state; 234: cutoff state; 236: charge-prohibited state; 238: discharge-prohibited state; 250: contactor; 260: temperature sensor; 280: boost device; 290: battery for boost device; 292: solar cell; 294: MPPT; 300: power generation unit; 310: solar cell; 320: MPPT; 400: bus; 500: load; 510: controller; 700: HAPS; 702: beam; 704: communication area; 710: aircraft body; 712: wing portion; 714: left wing portion; 716: right wing portion; 720: central part; 722: flight control unit; 724: communication control unit; 730: propeller; 740: pod; 750: solar battery panel; 800: management apparatus; 1200: computer; 1210: host controller; 1212: CPU; 1214: RAM; 1216: graphics controller; 1218: display device; 1220: input/output controller; 1222: communication interface; 1224: storage apparatus; 1230: ROM; 1240: input/output chip.

## Claims

1. A system comprising:
a plurality of switching units connected in parallel to a bus to which a power generation unit and a load are connected, the plurality of switching units each being switchable among a current-carrying state in which a current flows between a connected battery pack and the bus, a charge-prohibited state in which a current flows from the battery pack to the bus but a current is prohibited from flowing from the bus to the battery pack, a discharge-prohibited state in which a current flows from the bus to the battery pack but a current is prohibited from flowing from the battery pack to the bus, and a cutoff state in which no current flows between the bus and the battery pack, and each having an NMOS-type discharge FET and an NMOS-type charge FET;
a plurality of battery packs, each being the battery pack, that are respectively connected to the plurality of switching units;
a boost device which supplies power for control to two or more switching units of the plurality of switching units; and
a management unit which manages charging and discharging of the plurality of battery packs by using the boost device.

2. The system according to claim 1, wherein the boost device supplies the power for control to all of the plurality of switching units.

3. The system according to claim 1, wherein the boost device is connected to the bus, boosts power from the bus, and supplies the power for control to the two or more switching units of the plurality of switching units.

4. The system according to claim 1 further comprising a battery for boost device, wherein
the boost device boosts power from the battery for boost device, and supplies the power for control to the two or more switching units of the plurality of switching units.

5. The system according to any one of claims 1 to 4, wherein the management unit, when charging multiple battery packs of the plurality of battery packs, controls the boost device to bring multiple switching units, among the switching units, that are connected to the multiple battery packs to be charged, each being the battery pack, into the discharge-prohibited state.

6. The system according to any one of claims 1 to 4, wherein the management unit performs management such that, when multiple battery packs of the plurality of battery packs are charged, if a voltage difference between the multiple battery packs to be charged, each being the battery pack, is greater than a predetermined threshold value, the charge FET is turned on and the discharge FET is turned off for each of multiple switching units, among the switching units, that are connected to the multiple battery packs, and if the voltage difference is smaller than the threshold value, the charge FET and the discharge FET are turned on for each of the multiple switching units.

7. The system according to claim 5, wherein the management unit performs management such that, when some battery packs of the plurality of battery packs are charged, if a voltage difference between the some battery packs is greater than a predetermined threshold value, the charge FET is turned on and the discharge FET is turned off for each of multiple switching units, among the switching units, that are connected to the some battery packs, so as to bring the switching unit into the discharge-prohibited state, and if the voltage difference is smaller than the threshold value, the charge FET and the discharge FET are turned on for each of the multiple switching units so as to bring the switching unit into the current-carrying state, and when the plurality of switching units are brought into the current-carrying state, temperatures of the some battery packs during charging of the some battery packs are obtained and monitored, the switching unit connected to a battery pack, among the some battery packs, a temperature of which has reached a preset temperature, is brought into the discharge-prohibited state, and the switching unit connected to any of some other battery packs of the plurality of battery packs is brought into the current-carrying state.

8. The system according to claim 5, wherein the management unit performs management such that some switching units, among the switching units, that are connected to some battery packs of the plurality of battery packs, are brought into the current-carrying state and some other switching units, among the switching units, that are connected to some other battery packs of the plurality of battery packs, are brought into the cutoff state, and the some battery packs are charged, temperatures of the some battery packs during charging of the some battery packs are obtained and monitored, the switching unit connected to a battery pack, among the some battery packs, a temperature of which has reached a preset temperature, is brought into the discharge-prohibited state, and the switching unit connected to any of the some other battery packs is brought into the current-carrying state.

9. The system according to any one of claims 1 to 4, wherein the management unit, when charging multiple battery packs of the plurality of battery packs, brings multiple switching units, among the switching units, that are connected to the multiple battery packs to be charged, each being the battery pack, into the current-carrying state, obtains and monitors a temperature of each of the multiple battery packs, switches the switching unit connected to the battery pack, among the multiple battery packs, a temperature of which has reached a preset first charging temperature threshold value, into the discharge-prohibited state, continually obtains and monitors a temperature of the battery pack connected to the switching unit switched into the discharge-prohibited state, and when a temperature has decreased to reach a second charging temperature threshold value that is lower than the first charging temperature threshold value, switches the switching unit connected to the battery pack into the current-carrying state.

10. The system according to any one of claims 1 to 4, wherein the management unit, when discharging multiple battery packs of the plurality of battery packs, controls the boost device to bring multiple switching units, among the switching units, that are connected to the multiple battery packs to be discharged, each being the battery pack, into the charge-prohibited state.

11. The system according to claim 10, wherein the management unit performs management such that, when multiple battery packs of the plurality of battery packs are discharged, if a voltage difference between the multiple battery packs to be discharged, each being the battery pack, is greater than a predetermined threshold value, the discharge FET is turned on and the charge FET is turned off for each of multiple switching units, among the switching units, that are connected to the multiple battery packs, and if the voltage difference is smaller than the threshold value, the discharge FET and the charge FET are turned on for each of the multiple switching units.

12. The system according to claim 10, wherein the management unit, when discharging some battery packs of the plurality of battery packs, if a voltage difference between the some battery packs is greater than a predetermined threshold value, brings each of multiple switching units, among the switching units, that are connected to the some battery packs, into the charge-prohibited state, and if the voltage difference is smaller than the threshold value, brings each of the multiple switching units into a current-carrying state, and when bringing each of the multiple switching units into the current-carrying state, obtains and monitors temperatures of the some battery packs connected to the multiple switching units, brings the switching unit connected to a battery pack, among the some battery packs, a temperature of which has reached a preset temperature, into the discharge-prohibited state, and brings the switching unit connected to any battery pack of some other battery packs of the plurality of battery packs into the current-carrying state.

13. The system according to any one of claims 1 to 4, wherein the management unit, when bringing some battery packs of the plurality of battery packs into the current-carrying state and bringing some other battery packs of the plurality of battery packs into the cutoff state, and causing the some battery packs to be discharged, obtains and monitors temperatures of the some battery packs, and in response to a temperature of any battery pack of the some battery packs reaching a preset temperature, brings the switching unit connected to the battery pack into the discharge-prohibited state, and brings the switching unit connected to any of the some other battery packs into the current-carrying state.

14. The system according to any one of claims 1 to 4, wherein the management unit, when discharging multiple battery packs of the plurality of battery packs, brings multiple switching units, among the switching units, that are connected to the multiple battery packs to be discharged, each being the battery pack, into the current-carrying state, obtains and monitors a temperature of each of the multiple battery packs, switches the switching unit connected to the battery pack, among the multiple battery packs, a temperature of which has reached a preset first discharging temperature threshold value, into the discharge-prohibited state or the cutoff state, continually obtains and monitors a temperature of the battery pack connected to the switching unit switched into the discharge-prohibited state or the cutoff state, and when a temperature has decreased to reach a second discharging temperature threshold value that is lower than the first discharging temperature threshold value, switches the switching unit connected to the battery pack into the current-carrying state.

15. The system according to any one of claims 1 to 4, wherein the boost device is a charge pump.

16. The system according to any one of claims 1 to 4, wherein
the system is mounted on a flight vehicle,
the plurality of battery packs are arranged in a wing portion of the flight vehicle,
the power generation unit performs solar power generation, and
the load is a motor which rotates a propeller of the flight vehicle.

17. The system according to claim 16, comprising the flight vehicle.

18. The system according to claim 17, wherein the flight vehicle includes
a communication control unit which provides a wireless communication service to a user terminal within a communication area formed by emitting a beam toward ground using power discharged by the plurality of battery packs.
